# EUROPEAN PATENT APPLICATION

(11) **EP 4 653 070 A1**
(43) Date of publication of application: **26.11.2025**
(21) Application number: 25165660.9
(22) Date of filing: 24.03.2025
(51) Int. Cl.: B01D 3/14, C08G 69/28, B01D 3/32, B01J 19/24

(54) **CONTINUOUS POLYMERIZATION EQUIPMENT AND CONTINUOUS POLYMERIZATION PROCESS FOR PREPARING POLYAMIDE BY USING DIACID AND DIAMINE**

(30) Priority: 20.05.2024 CN 202410623625
(71) Applicant: Zhejiang NHU Company Ltd., Shaoxing, Zhejiang 312500 (CN); Zhejiang NHU Special Materials Co., Ltd., Shaoxing, Zhejiang 312369 (CN)
(72) Inventor: DU, Weiyuan, Shangyu District Shaoxing, Zhejiang, 312369 (CN); LI, Xueming, Shangyu District Shaoxing, Zhejiang, 312369 (CN); ZHANG, Xiongwei, Shangyu District Shaoxing, Zhejiang, 312369 (CN); WEI, Guanghui, Shangyu District Shaoxing, Zhejiang, 312369 (CN); WU, Liang, Shangyu District Shaoxing, Zhejiang, 312369 (CN); DENG, Hangjun, Shangyu District Shaoxing, Zhejiang, 312369 (CN); ZHOU, Guiyang, Shangyu District Shaoxing, Zhejiang, 312369 (CN)
(74) Representative: Meyer-Dulheuer MD Legal Patentanwälte PartG mbB

(57) **Abstract**

A continuous polymerization equipment and a continuous polymerization process for preparing polyamide by using a diacid and a diamine. The continuous polymerization equipment includes an evaporator, a reactive distillation column, a flash drum and a polymerizer which are sequentially communicated by pipelines. The number of trays in the tray section of the reactive distillation column is in a range of 15 to 30, the distance between two adjacent trays is in a range of 400 mm to 600 mm, and the height of an overflow weir of the trays is in a range of 50 mm to 300 mm. The continuous polymerization equipment further includes a preheating heat exchanger and a prepolymerization heat exchanger. The prepolymerization heat exchanger and the reboiler are circularly communicated by the pipelines, so that material enters the preheating heat exchanger, the prepolymerization heat exchanger and the reboiler in turn through the tray, and enables continuous circulation between the prepolymerization heat exchanger and the reboiler.

## Description

### CROSS-REFERENCE TO RELATED APPLICATION

This application claims priority to Chinese patent application No. 202410623625.7, filed on May 20, 2024, and titled "CONTINUOUS POLYMERIZATION EQUIPMENT OF POLYAMIDE AND CONTINUOUS POLYMERIZATION PROCESS THEREOF".

### TECHNICAL FIELD

The present disclosure relates to the field of polyamide technology, and in particular, to a continuous polymerization equipment and a continuous polymerization process for preparing a polyamide by using a diacid and a diamine.

### BACKGROUND

Polyamide (PA), commonly referred to as Nylon, is a general term for polymers whose repeating units in the macromolecular mainchain contain amide groups (-NH-C=O). For example, Nylon 6 can be synthesized by ring-opening polymerization of lactams, Nylon 66 can be synthesized by condensation polymerization of dicarboxylic acids with diamines.

When preparing a polyamide by polycondensation of diacid and diamine, the typical industrial process includes mixing diacid and diamine in water at a molar ratio of 1:1 in a salt pond to prepare a 50wt% salt solution, and then gradually removing the physical water and generated water in the system to complete the polycondensation. However, because diamine is volatile, it will volatilize from the salt solution during evaporation and concentration, which will not only unbalance the ratio of carboxylic acid/amine in the salt solution and affect the polymerization degree and performance of polyamide products, but also increase the production cost due to great loss. At the same time, the volatile diamine will be discharged with the gas phase, which will bring environmental pollution problems.

### SUMMARY

In view of above, it is necessary to provide a continuous polymerization equipment and a continuous polymerization process for preparing a polyamide by using a diacid and a diamine. The polyamide prepared by using the continuous polymerization equipment can not only ensure the quality of the polyamide products, but also reduce losses, reduce the generation of three wastes, reduce process risks and operation costs.

A continuous polymerization equipment for preparing a polyamide by using a diacid and a diamine, including an evaporator, a reactive distillation column, a flash drum and a polymerizer which are sequentially connected with and in communication with each other by pipelines. The reactive distillation column includes a reboiler and a tray section located on the reboiler. The tray section includes a plurality of trays, the number of tray of the plurality of trays in the tray section is in a range of 15 to 30. A distance between adjacent two of the plurality of trays is in a range of 400 mm to 600 mm, and a height of an overflow weir of each of the plurality of trays is in a range of 50 mm to 300 mm. The continuous polymerization equipment further includes a preheating heat exchanger and a prepolymerization heat exchanger. One of the plurality of trays adjacent to the reboiler is sequentially connected with and in communication with the preheating heat exchanger and the prepolymerization heat exchanger through the pipelines. The prepolymerization heat exchanger and the reboiler are circularly connected and in communication by the pipelines, so that material is capable of sequentially entering the preheating heat exchanger, the prepolymerization heat exchanger and the reboiler through the plurality of trays, enabling continuous circulation between the prepolymerization heat exchanger and the reboiler.

In some embodiments, the number of tray of the plurality of trays is in a range of 20 to 25.

In some embodiments, the distance between adjacent two of the plurality of trays is in a range of 450 mm to 550 mm.

In some embodiments, the height of the overflow weir of each of the plurality of trays is in a range of 100 mm to 200 mm.

In some embodiments, an online infrared detector is disposed on a gas phase outlet pipeline at a top of the reactive distillation column.

In some embodiments, the continuous polymerization equipment further includes an online diamine replenishing pipeline for replenishing the diamine in real time. The online diamine replenishing pipeline is connected with and in communication with the prepolymerization heat exchanger.

In some embodiments, the polymerizer includes a polymerizer body, an exhaust pipe in communication with the polymerizer body, and a multi-stage heat exchanger located in the exhaust pipe.

In some embodiments, the number of the polymerizer is one or more than two.

The present disclosure further provides a continuous polymerization process for preparing a polyamide by using a diacid and a diamine, which is carried out by using the above continuous polymerization equipment, including the following steps: transporting a salt solution to the evaporator for evaporation and concentration; then transporting same to the reactive distillation column; after preheating, reaching the plurality of trays in the tray section and flowing layer by layer to the plurality of trays adj acent to the reboiler; then sequentially transporting same to the preheating heat exchanger, the prepolymerization heat exchanger, and the reboiler, and then to the flash drum and the polymerizer for flash evaporation and polymerization; and obtaining the polyamide after pelletization. A material circulation is carried out between the prepolymerization heat exchanger and the reboiler.

In some embodiments, a degree of polymerization of a material transporting to the preheating heat exchanger is in a ranger of 2 to 3.

The present disclosure can prolong a residence time of the salt solution by adjusting the number of the tray, distance of the tray, and the height of the overflow weir of the tray in the reactive distillation column, allowing it to undergo preliminary pre polymerization. On the one hand, preliminary pre polymerization can reduce a concentration of free amines in the salt solution, thereby reducing the loss of amines during evaporation and concentration. On the other hand, after the residence time isprolonged, the gas phase generated by the evaporation and concentration of the reboiler rises in the tower and comes into countercurrent contact with the salt solution for mass and heat transfer. It can fully be in contact with the salt solution. When the free amine in the salt solution is reduced due to preliminary pre polymerization, it can absorb the binary amine in the gas phase through the dual effects of physical absorption (cooling and condensation) and chemical absorption (reacting with a carboxylic acid in the salt solution to form a carboxylic acid amine salt). This not only better maintains a ratio of the carboxylic acid/ the amine in the salt solution, ensuring a quality of the polyamide product, but also reduces losses and reduces the production of three wastes, making the process more competitive.

At the same time, the present disclosure provides the preheating heat exchanger and the prepolymerization heat exchanger, so that the material enters the preheating heat exchanger through the tray adjacent to the reboiler for preheating, and then enters the prepolymerization heat exchanger for evaporation concentration and prepolymerization. This may reduce flow rate of the heat flux and temperature of the prepolymerization heat exchanger, avoiding a material adecomposition and a material carbonization caused by high temperature difference. It can not only ensure the quality of the polyamide product, but also ensure a heat exchange efficiency of the prepolymerization heat exchanger and reduce process risks and operating costs.

### BRIEF DESCRIPTION OF THE DRAWINGS

In order to more clearly explain the technical scheme in the embodiments of the present disclosure or the traditional technology, the following is a brief introduction of the drawings required to be used in the description of the embodiments or the traditional technology. It is obvious that the drawings described below are only some embodiments of the present disclosure. Other drawings can also be obtained from these drawings.
FIG. 1 is a schematic view of a continuous polymerization equipment for preparing a polyamide by using a diacid and a diamine in the present disclosure.
FIG. 2 is a schematic view of a polymerizer according to one embodiment in the present disclosure.

Reference signs are as follows: 1 represents an evaporator; 2 represents a reactive distillation column; 3 represents a flash drum; 4 represents a polymerizer; 5 represents a pelletizer; 6 represents a preheating heat exchanger; 7 represents a prepolymerization heat exchanger; 21 represents a tray; 22 represents a reboiler; 2a represents an online infrared detector; 6a represents a circulation pump; 41 represents a polymerizer body; 42 represents a exhaust pipe; and 43 represents a multi-stage heat exchanger.

### DETAILED DESCRIPTION

In order to facilitate understanding of the present disclosure, a more detailed description of the present disclosure will be provided below. However, it should be understood that the present disclosure can be implemented in many different forms and is not limited to the embodiments or examples described herein. On the contrary, the purpose of providing these embodiments or examples is to make the understanding of the disclosed content of the present disclosure more thorough and comprehensive.

Unless otherwise defined, all technical and scientific terms used in this article have the same meanings as those commonly understood by those skilled in the art belonging to the present disclosure. The terms used in the specification of this application are only for the purpose of describing specific embodiments or examples, and are not intended to limit the present disclosure. The optional scope of the term "and/or" used in the present disclosure includes any one of two or more related listed items, as well as any and all combinations of related listed items, including any two related listed items, any more related listed items, or a combination of all related listed items.

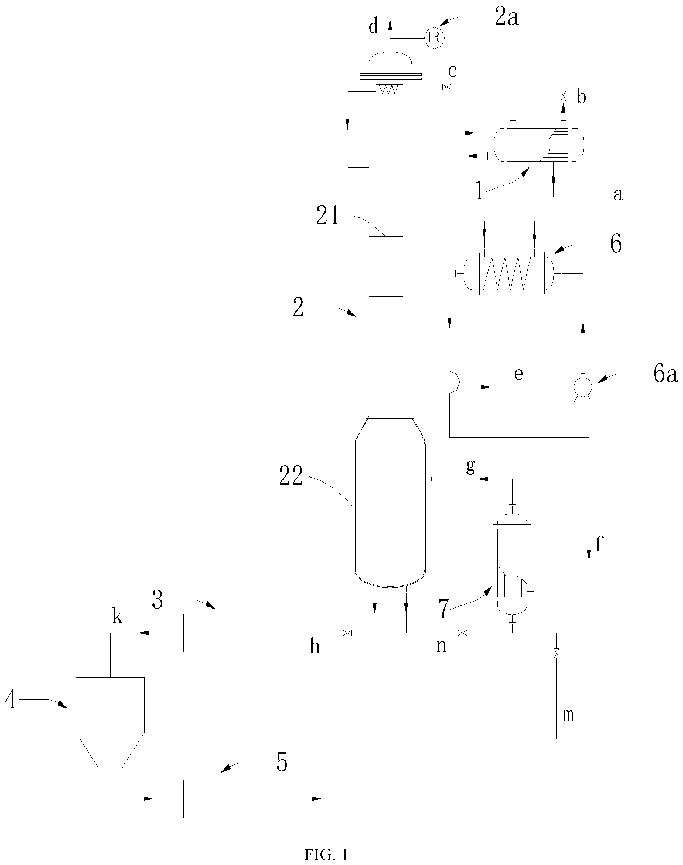

Referring to FIG. 1, a continuous polymerization equipment for preparing a polyamide by using a diacid and a diamine provided by the present disclosure is mainly used for evaporating and concentrating the salt solution prepared by the diacid and the diamine, removing physical water and generated water in the system, and completing polycondensation. The diacid in the present disclosure broadly refer to C4 to C12 dicarboxylic acids in the art, such as succinic acid, glutaric acid, adipic acid, pimelic acid, suberic acid, azelaic acid, sebacic acid, dodecanedioic acid, etc., and the diamine in the present disclosure broadly refer to C4 to C12 diamines in the art, such as 1,4-butylenediamine, 1,5-pentenediamine, 1,6-hexamethylenediamine, 1,7-heptamethylenediamine, 1,8-octamethylenediamine, 1,9-nonamethylenediamine, and 1,10-decamethylenediamine, laurel lamine, etc. The concentration of the salt solution may be adjusted to any desired proportion. Preferably, the diacid and diamine are mixed with water in a salt pond at a molar ratio of 1:1, to obtain a salt solution with a concentration in a range of 50wt% to 65wt%.

Specifically, the continuous polymerization equipment includes an evaporator 1, a reactive distillation column 2, a flash drum 3 and a polymerizer 4 which are sequentially connected with and in communication with each other by pipelines.

The evaporator 1 is capable of evaporating and concentrating a prepared salt solution. In detail, the salt solution prepared by the diacid and the diamine enters the evaporator 1 through a pipeline *a*, and the evaporator 1 utilizes a steam for heating, and a temperature of the steam is in a range of 100 °C to 200 °C. And the pressure is preferably kept in a range of 0.1MPa (g) to 0.25MPa (g) during a heating process, so that the salt solution may be evaporated and concentrated, and a water content of the salt solution may be reduced.

A gas phase generated in a process of evaporation and concentration of the salt solution includes water and a small amount of the diamine. Optionally, the gas phase is discharged from the evaporator 1 through a pipeline b, cooled and collected by a cooling tower and other equipment, and recycled for a preparation of the salt solution, so that resources may be recycled, which is environmentally friendly.

The reactive distillation column 2 includes a reboiler 22 and a tray section located on the reboiler 22, which is capable of receiving a material evaporated and concentrated by the evaporator 1, that is, a preliminarily concentrated salt solution. Specifically, the material enters a preheater which is disposed on an upper part of the reactive distillation column 2 through a pipeline c, then preheating by the rising gas phase inside the reactive distillation column 2 before entering an upper part of the tray section of the reactive distillation column 2, such as the second or third tray 21 from a top of the reactive distillation column 2, then flowing through each tray 21 layer by layer and entering into contact with the rising gas phase inside the reactive distillation column 2 in reverse flow for mass and heat transfer.

The tray section includes a plurality of trays 21, the number of tray 21 of the plurality of trays 21 in the tray section is generally in a range of 8 to 10, a distance between adjacent two of the plurality of trays 21 is generally in a range of 200 mm to 300 mm, and the height of an overflow weir of the plurality of trays 21 is generally in a range of 50 mm to 300 mm. However, this arrangement minimizes the contact residence time between the material and the gas phase, a prepolymerization reaction cannot be started on the tray, which leads to a free amine in the material easily volatilized after further preheating, which makes a ratio of a carboxylic acid to an amine in the material unbalanced, which is not conducive to a rapid progress of the subsequent prepolymerization reaction. Although the lost amine may be optimized and adjusted through a salt-forming stage, it will often increase a consumption of polymerization and the cost. At the same time, the diamine volatilized into the gas phase will be discharged with the gas phase, which will bring environmental pollution problems.

In view of this problem, the present disclosure adopts arrangement of the tray 21 in the tray section to solve it. Specifically, the number of the tray 21 in the tray section is in a range of 15 to 30, preferably, in a range of 20 to 25, the distance between adjacent two of the plurality of trays 21 is in a range of 400 mm to 600 mm, preferably, in a range of 450 mm to 550 mm, and the height of the overflow weir of the tray 21 is in a range of 50 mm to 300 mm, preferably, in a range of 100 mm to 200 mm. In the present disclosure, by adjusting the number and distance of the tray 21 in the reactive distillation column 2, the time for the material reaching the tray 21 adjacent to the reboiler layer by layer is prolonged. By adjusting the height of the overflow weir of the tray 21 in the reactive distillation column 2, a residence time of the material in each layer of the tray 21 is prolonged, so that an overall residence time of the material in the reactive distillation column is extended, and then a preliminary prepolymerization reaction of the material occurs at this stage.

Through the preliminary prepolymerization reaction, the free amines can be converted into polyamide dimers, thereby reducing a concentration of the free amines in the material and minimizing amine loss during evaporation and concentration. At the same time, after the residence time is prolonged, the gas phase generated by the evaporation and concentration of the reboiler rises in the tower can be fully in contact with the material in a process of mass transfer and heat transfer when it rises in the tower and is in contact with the material in countercurrent. When the free amine in the material is reduced due to the preliminary prepolymerization reaction, it can absorb the diamine carried in the gas phase through the dual effects of physical absorption (cooling and condensation) and chemical absorption (reacting with the carboxylic acid in the material to form a carboxylic acid amine salt). This not only better maintains a ratio of the carboxylic acid to the amine in the material, ensuingr the quality of the polyamide products, but also reduces losses and a production of the generation of three wastes, making the process more competitive.

Referring to FIG. 1, the continuous polymerization equipment further includes a preheating heat exchanger 6 and a prepolymerization heat exchanger 7. one of the plurality of trays 21 adjacent to the reboiler 22 is sequentially connected with and in communication with the preheating heat exchanger 6 and the prepolymerization heat exchanger 7 through the pipelines. The prepolymerization heat exchanger 7 and the reboiler 22 are circularly connected and in communication with each other by the pipelines, so that the material is capable of sequentially entering the preheating heat exchanger 6, the prepolymerization heat exchanger 7 and the reboiler 22 in turn through the plurality of trays 21, and enabling continuous circulation between the prepolymerization heat exchanger 7 and the reboiler 22.

The preheating heat exchanger 6 is capable of receiving the material flowing out from one of the plurality of trays 21 adjacent to the reboiler 22 in the tray section, that is, the salt solution which is preliminarily prepolymerized in the tray section, and preheating it. In detail, when the material flows to one of the plurality of trays 21 adjacent to the reboiler 22, the material enters the preheating heat exchanger 6 through a pipeline e for preheating.

Optionally, the material is collected at one of the plurality of trays 21 adjacent to the reboiler 22 through a collector such as a collecting tray, and then the circulation pump 6a is connected to convey the material to the preheating heat exchanger 6 for preheating. The circulation pump 6a can be a type of pump commonly in the industry, such as a centrifugal pump, a diaphragm pump, etc.. In the present disclosure, the circulation pump 6a is preferably a centrifugal pump.

Optionally, a heat source of the preheating heat exchanger 6 may be liquid heat transfer oil at 200°C to 250°C, such as T66 (hydrogenated terphenyls mixture) or similar heat transfer oil in other industries. Alternatively, a heat source of the preheating heat exchanger 6 also may be or the steam at the same temperature, as long as the material can be preheated to 200°C to 220°C. In view of the preliminary prepolymerization of the material in the tray section of the reactive distillation column 2, in order to avoid the blockage and poor heat exchange effect caused by high viscosity material, the preheating heat exchanger 6 in the present disclosure preferably adopts a high-velocity tubular heat exchanger, and the heat source preferably adopts a medium-pressure steam to supply heat, and its latent heat is capable of further enhancing the heat exchanger effect, so as to achieve a purpose of rapidly preheating the material.

The prepolymerization heat exchanger 7 is capable of receiving the material preheated by the preheating heat exchanger 6 for evaporation concentration and prepolymerization to achieve an expected concentration and a prepolymerization degree. In detail, the material preheated by the preheating heat exchanger 6 enters a bottom of the preheating heat exchanger 7 through a pipeline *f*, a movement of the material in the polymerization heat exchanger 7 is realized by a density difference formed by the front-end pump forced transportation into the polymerization heat exchanger 7, and then evaporation concentration and prepolymerization are carried out.

After preheating by the preheating heat exchanger 6, the preheating heat exchanger 7 is only required to preheat the material to 220°C to 250°C. However, if only the polymerization heat exchanger 7 is provided in the present disclosure, the polymerization heat exchanger 7 needs to be heated through a heat-conducting oil at 280°C to 300°C, which not only has a greater heat loss, but also has poor economy and practicality. Moreover, the surface temperature of the polymerization heat exchanger 7 will be higher, and long-term operation will lead to carbonization and scaling of the material in the polymerization heat exchanger 7. A heat exchange efficiency and a material flowability of the prepolymerization heat exchanger 7 with scaling will significantly decrease, leading to requirement for emergency shutdown and cleaning. This not only increases process risks and operating costs, but also affects a color and a performance of polyamide products if a scaling layer falls off and enters the material.

The present disclosure provides the preheating heat exchanger 6 and the prepolymerization heat exchanger 7, so that the material enters the preheating heat exchanger 6 through the last tray 21 for preheating, and then enters the prepolymerization heat exchanger 7 for evaporation concentration and prepolymerization. This may reduce flow rate of the heat flux and temperature of the prepolymerization heat exchanger 7, avoiding a material adecomposition and a material carbonization caused by high temperature difference. It can not only ensure the quality of the polyamide product, but also ensure a heat exchange efficiency of the prepolymerization heat exchanger 7 and reduce process risks and operating costs.

The reboiler 22 of the reactive distillation column 2 is capable of receiving the material after evaporation concentration and prepolymerization in the prepolymerization heat exchanger 7, and the material includes gas phase material and liquid phase material. In detail, the material obtained in the polymerization heat exchanger 7 enters the reboiler 22 of the reactive distillation column 2 through a pipeline g for gas-liquid separation. After fully exchanging heat and absorbing with the material in the tray 21 of the tray section, the gas-phase material is discharged from the reactive distillation column 2 through a pipeline d disposed on the gas-phase outlet at the top of the reactive distillation column. A part of the liquid-phase material enters the flash drum 3 through a pipeline h for further flash evaporation and polymerization, and the other part circulates into the polymerization heat exchanger 7 through a pipeline n.

Optionally, an online infrared detector 2a is disposed on the pipeline d arranged at the gas phase outlet at the top of the reactive distillation column 2, and the online infrared detector 2a is capable of monitoring the content of multi-component small molecules in the gas phase in real time, especially the content of diamine. At the same time, the present disclosure may also set up an online diamine replenishing pipeline *m* to replenish diamine into the prepolymerization heat exchanger 7 in real time according to the monitored diamine loss change, so that the ratio of the carboxylic acid to the amine in the prepolymerization heat exchanger 7 is within a suitable range. It can be understood that online diamine replenishing pipeline *m* can be directly connected to the polymerization heat exchanger 7 or connected to the pipeline *f*, and connected to the polymerization heat exchanger 7 through the pipeline*f.*

The flash drum 3 adopts a variable diameter pipe, and the water in the liquid phase material is gradually flashed through pipeline resistance to reach a gas-liquid two-phase state, and the preliminarily prepolymerized polyamide in the material is further polymerized in the flash drum 3. The flash drum 3 may heat material to any temperature in a range of 250°C to 300°C, and the water content in a gas-liquid two-phase material may be any ratio in a range of 0.1wt% to 2wt%.

The material (gas-liquid two-phase) obtained by the flash drum 3 enters the polymerizer 4 through a pipeline *k*, and the polymerizer 4 is capable of separating the entered gas-liquid two-phase material, and further removing the water in the system in a vacuum system, so as to promote the reaction to final polymerization, to obtain a polyamide product. The water content of the polyamide product may be any ratio in a range of 0.01wt% to 0.1wt%. Finally, the product obtained in the polymerizer 4 was granulated by the pelletizer 5 to obtain the polyamide product.

To achieve the required degree and molecular weight distribution of the final polyamide product, the materials entering the polymerizer 4 is required to efficiently and stably remove the water by the polymerizer 4 in the system, and at the same time to ensure the residence time of the materials in the polymerizer 4, so that the polyamide product can reach the final state.

In an embodiment, the number of the polymerizer 4 may be one or more, preferably two. For example, two polymerizers 4 may be independently connected to the flash drum 3, so that production may be switched as required.

When the gas-liquid two-phase material enters the polymerizer 4 for separation, it is necessary to avoid that some products become to gel due to uneven heating due to liquid level fluctuations. Gel will affect the product quality and at the same time, become a black spot when be continuously heated, further reducing the product quality.

The fluctuation of liquid level is generally caused by the fluctuation of vacuum. At present, the commonly solution is to directly pump out a greater amount of steam generated by the polymerization process in the polymerizer 4 through a water ring vacuum pump or other similar equipment, and then to cool it by means of spraying and then to discharge it. However, if the gas-phase water in the polymerizer 4 is directly extracted, a pumping flow of the gas-phase water will fluctuate, which will cause the water ring pump of the polymerizer 4 to be constantly adjusted to balance the fluctuation caused by the variation of pumping flow, which will inevitably affect the vacuum degree in the polymerizer 4. Unstable vacuum has a great influence on the liquid level control of the polymerizer 4, which will lead to undesirable crosslinking side reaction, gel and black spots, so that frequent switching and cleaning are necessary. At the same time, a greater amount of process steam extracted by vacuum pump needs to be cooled by circulating spray water or other similar means, which not only wastes the heat of process steam, but also consumes other energy for cooling, resulting in high production cost.

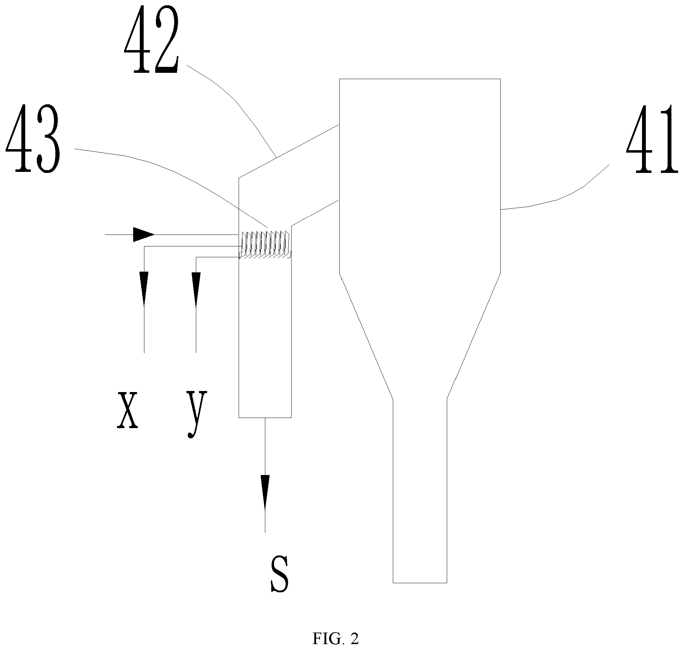

Referring to FIG. 2, the polymerizer 4 includes a polymerizer body 41, an exhaust pipe 42 in communicating with the polymerizer body 41 and a multi-stage heat exchanger 43 located in the exhaust pipe 42. The number of the multi-stage heat exchanger 43 is more than two, including two, three, four, etc., so that the steam is heat-exchanged by the multi-stage heat exchanger to generate low-pressure steam and hot water.

In the present disclosure, the water ring vacuum pump is capable of establishing a vacuum of the polymerizer 4, and the multi-stage heat exchanger 43 is disposed in the exhaust pipe 42 of the polymerizer 4 to exchange heat with process steam, and a certain amount of the low-pressure steam and the hot water are co-produced by using the heat of process steam. At the same time, the gas phase cooled by the multi-stage heat exchanger 43 is mainly non-condensable gas and a small part of process steam, which ensures a temperature operation of a vacuum system, avoids unnecessary frequent switching and cleaning steps caused by vacuum fluctuation, further utilizes the heat of process steam and reduces the use of cooling medium. Therefore, the operation and production costs may be reduced, and the quality stability of polyamide products may be improved, and gels and black spots may be minimized.

The multi-stage heat exchanger 43 in the present disclosure is a common heat exchanger, such as a tubular heat exchanger, a wound tube heat exchanger, etc. The multi-stage heat exchanger 43 can generate low-pressure steam and hot water in stages at the same time, perform secondary sectional heat exchange on the process steam, and maximize the heat utilization of the process steam. The process steam after full heat exchange is mainly non-condensable gas (i.e., nitrogen, amine, etc.) and a small amount of water, which may be quickly extracted by water ring vacuum pump to spray tower or other similar cooling equipment for final cooling and then discharged.

Referring to FIG. 1, the present disclosure further provides a continuous polymerization process for preparing a polyamide by using a diacid and a diamine, which is carried out by using the above continuous polymerization equipment, including the following steps:
transporting a salt solution to the evaporator 1 for evaporation and concentration, then transporting same to the reactive distillation column 2; after preheating, reaching the tray 21 in the tray section and flowing layer by layer to one of the plurality of trays 21 adjacent to the reboiler 22; then sequentially transporting same to the preheating heat exchanger 6, the prepolymerization heat exchanger 7, and the reboiler 22, and then to the flash drum 3 and the polymerizer 4 for flash evaporation and polymerization; and obtaining the polyamide after pelletization. A material circulation is carried out between the prepolymerization heat exchanger 7 and the reboiler 22.

Optionally, a degree of polymerization of the material delivered to the preheating heat exchanger 6 may be in a range of 2 to 3. It can avoid the decomposition and carbonization of the material in the prepolymerization heat exchanger 7 due to greater temperature difference and the scaling of the prepolymerization heat exchanger, which can not only ensure the quality of the polyamide products, but also ensure the heat exchange effect of the prepolymerization heat exchanger 7.

Optionally, the water content of the material obtained by the prepolymerization heat exchanger 7 is preferably adjusted in a range of 10wt% to 12wt%.

Hereinafter, the continuous polymerization equipment for preparing the polyamide and the continuous polymerization process will be further illustrated by the following specific embodiments.

### Example 1

An adipic acid and a hexamethylenediamine are mixed in water in a salt pond at a molar ratio of 1:1 to form a salt solution containing 50wt% nylon 66 salt.

The salt solution is transported to the evaporator 1 through the pipeline *a* at a speed of 0.5 m³/h. The salt solution is heated to 140 °C by the evaporator 1 and maintained a pressure of 0.2MPa (g) to remove some water from the salt solution, resulting in a material with a water content of 25 wt%, which is the preliminary concentrated salt solution.

The material is transported to the reactive distillation column 2 through the pipeline c at a speed of 0.33 m³/h. The reactive distillation column 2 includes twenty trays 21 with a distance of 450 mm between adjacent trays 21. The height of overflow weir of the trays is 150 mm. After entering the reactive distillation column 2, the material first passes through the preheater at the top for preheating, and then enters the third tray 21 located at the top of the reactive distillation column 2. It flows layer by layer through each section of the tray 21, and then forms a preliminary pre polymerized salt solution at the last section of one of the plurality of trays 21 adjacent to the reboiler 22. Through sampling and testing, the degree of polymerization of the material at this stage denoted as DP is in a range of 2 to3. Furthermore, the material is collected through a collection tray and then transported to the preheating heat exchanger 6 by a centrifugal pump. It is preheated to 220 °C by the preheating heat exchanger 6 and then enters the prepolymerization heat exchanger 7 through the pipeline *f* to be heated to 245 °C. In this way, the water may be further removed and pre polymerized to obtain a material with a water content of 10 wt%. Furthermore, the material is transported to the reboiler of the reactive distillation column 2 through the pipeline g. After gas-liquid separation, a portion of the liquid phase material is circulated through the pipeline n into the prepolymerization heat exchanger 7, while the other portion is transported to the flash drum 3 through the pipeline h at a speed of 0.26 m³/h. The material is heated to 270 °C by the flash drum 3 to obtain a material with a water content of 0.5 wt%.

Then, the material is transported through the pipeline k at a speed of 0.26 m³/h to the polymerizer 4. It undergoes further polymerization to achieve a water content of 0.1wt% and a relative viscosity of 2.4, to obtain a product. The product is then transported to the granulator 5 for granulation to obtain the polyamide product. In addition, the process steam (0.027 m³/h) generated by the polymerizer 4 is discharged after heat exchange and cooling through the multi-stage heat exchanger 43 in the exhaust pipe 42.

### Comparative Example 1

The difference between Comparative Example 1 and Example 1 is that the number of the trays 21 in the reactive distortion column 2 is twenty, the distance between adjacent trays 21 is 300 mm, and the height of the overflow weir is 50 mm.

Through sampling and analysis of the material entering the prepolymerization heat exchanger 7, it was shown that it did not undergo pre polymerization reaction, that is, the degree of polymerization is 0. Meanwhile, tracking is conducted using the online infrared detector at the gas phase outlet pipeline d at the top of the reactive distillation column. It is found that under the same evaporation rate, the peak of hexamethylenediamine is significantly enhanced. According to the analysis of the fully condensed test, the amine content in the condensate water at the top of the reactive distillation column in Example 1 is 0.12%, while that in Comparative Example 1 is 0.27%. A content of end groups in the final polyamide product was tested, with 51 mol/kg in Example 1 and 45mol/kg in Comparative Example 1.

It can be seen that when the arrangement of the tray 21 in the reactive distillation column 2 is not within a scope of the present disclosure, preliminary pre polymerization reaction cannot occur on the tray 21, and the loss of diamine will significantly increase, leading to an increase in COD in the wastewater, especially ammonia nitrogen compounds, which are more troublesome in wastewater treatment. Meanwhile, the loss of a greater proportion of amines also leads to a decline in the quality of polyamide products.

In addition, a greater proportion of amine loss requires an increase in the residence time in the polymerizer 4 for the material in Comparative Example 1 to achieve the target polymerization degree or viscosity. The longer the residence time and the higher the liquid level, the greater the amine loss. And the loss ratio fluctuates, leading to constant changes in the liquid level, frequent changes in the liquid level will lead to an increase in the proportion of gel and black spot of polyamide products, which will seriously affect the quality. Specifically, after long-term operation of the continuous polymerization equipment in Example 1, the number of black spots per kilogram of the obtained polyamide product is less than 10, while after long-term operation of the continuous polymerization equipment in Comparative Example 1, the number of black spots per kilogram of the obtained polyamide product is greater than 20.

### Comparative Example 2

The difference between Comparative Example 2 and Example 1 is that the material directly enters the polymerization heat exchanger 7 after passing through the tray 21 adjacent to the reboiler, and the polymerization heat exchanger 7 rapidly heats the material with high-temperature heat transfer oil at 300°C.

Because the preheating heat exchanger 6 was not used in Comparative Example 2, the temperature and flow rate of heat transfer oil in the polymerization heat exchanger 7 are greatly increased. According to the equivalent capacity conversion, the total heat of Example 1 is about 430,000 Kcal/h, while the heat of heat transfer oil (including heat loss) required in Comparative Example 2 is 500,000 Kcal/h, which increased the energy consumption by 16% year-on-year. In addition, according to the long-term operation results, the product chromaticity of Comparative Example 2 is generally in a range of 5 to 10 (i.e., YI=5-10), while the product chromaticity of Example 1 is generally in a range of 1 to 3 (i.e., YI=1-3). This is because the heat transfer oil temperature of the prepolymer heat exchanger 7 in Comparative Example 2 is greater, which will make some prepolymers polymerize quickly, resulting in the rapid scaling in the pipe of the prepolymer heat exchanger 7, which will lead to decomposition after long-term operation and produce unnecessary colors into the final product. At the same time, after scaling of the polymerization heat exchanger 7, the heat exchange efficiency is greatly reduced, and the flow velocity in the polymerization heat exchanger 7 is further slowed down, and finally the operation is forced to stop, further increasing a operation cost and a cleaning difficulty.

### Example 2

The difference between Example 2 and Example 1 is that the generated process steam (0.027m3/) is directly extracted by a water ring pump, sprayed and cooled, and then discharged.

After comparing the long-term operation data of Example 1 and Example 2, a rate of a gel of the product in Example 1 is in a range of 0.1‰ to 0.15‰, a rate of a black spot is in a range of 0.16‰ to 0.23‰, and a time of an equipment switching is in a range of 7 months to 8 months. A rate of a gel of the product in Example 2 is in a range of 0.23‰ to 0.32‰, a rate of a black spot is in a range of 0.2%o to 0.29‰, and a time of an equipment switching is in a range of 3 months to 4 months.

According to a calculation of mass production, the polymerizer 4 may continuously generate steam at 280°C ranging from 1 t/h to 1.5 t/h, which may be about 500,000 Kcal/h, and generate about 4,000,000 calories in a year, and the converted standard coal may be about 500 tce per year to 600 tce per year. By providing multi-stage heat exchanger 43 to cool the process steam, 0.15t/h of low-pressure steam and 8t/h of hot water at 75°C may be generated at the same time. Through the implementation of the above process scheme, the use of circulating water can be reduced, and at the same time, a certain amount of low-pressure steam and a greater amount of high-temperature water may be regenerated by using process steam, which may be used for heat tracing and insulation of other devices in a whole, such as pipelines such as hexamethylenediamine and nylon salt. It not only reduces an extra use of a circulating water, but also reduces a purchase of an external steam, saving energy consumption by about 2 million yuan to 3 million yuan per year.

**In** addition, according to a comparison between Example 1 and Example 2, after the multi-stage heat exchanger 43 is equipped, the operation time of the equipment is obviously longer, and the number of switching and maintenance of the equipment is reduced by 1 to 2 times per year. The single maintenance and production cost of general equipment is about 1 million yuan to 1.5 million yuan. Combined with energy saving and reducing the number of equipment maintenance, the multi-stage heat exchanger 43 can reduce the production cost by about 3.5 million yuan to 5 million yuan per year.

The technical features of the above-mentioned embodiments can be combined arbitrarily. **In** order to make the description concise, not all possible combinations of the technical features are described in the embodiments. However, as long as there is no contradiction in the combination of these technical features, the combinations should be considered as in the scope of the present disclosure.

The above embodiments only express several embodiments ofthe present disclosure, and their descriptions are more specific and detailed, but they cannot be construed as limitations on the scope of the present disclosure. It should be noted that for one skilled in the art, without deviating from the concept of the present disclosure, a number of deformation and improvement can be made, which are within the scope of protection of the present disclosure. Therefore, the scope of protection of the present disclosure shall be governed by the claims.

## Claims

1. A continuous polymerization equipment for preparing a polyamide by using a diacid and a diamine, comprising an evaporator, a reactive distillation column, a flash drum and a polymerizer which are sequentially connected with and in communication with each other by pipelines, wherein the reactive distillation column comprises a reboiler and a tray section located on the reboiler, the tray section comprises a plurality of trays, the number of trays of the plurality of trays in the tray section is in a range of 15 to 30, a distance between adjacent two of the plurality of trays is in a range of 400 mm to 600 mm, and a height of an overflow weir of each of the plurality of trays is in a range of 50 mm to 300 mm;
the continuous polymerization equipment further comprises a preheating heat exchanger and a prepolymerization heat exchanger; one of the plurality of trays adjacent to the reboiler is sequentially connected with and in communication with the preheating heat exchanger and the prepolymerization heat exchanger through the pipelines; the prepolymerization heat exchanger and the reboiler are circularly connected and in communication by the pipelines, so that material is capable of sequentially entering the preheating heat exchanger, the prepolymerization heat exchanger and the reboiler through the plurality of trays, enabling continuous circulation between the prepolymerization heat exchanger and the reboiler.

2. The continuous polymerization equipment of claim 1, wherein the number of trays of the plurality of trays is in a range of 20 to 25.

3. The continuous polymerization equipment of claim 1, wherein the distance between adjacent two of the plurality of trays is in a range of 450 mm to 550 mm.

4. The continuous polymerization equipment of claim 1, wherein the height of the overflow weir of each of the plurality of trays is in a range of 100 mm to 200 mm.

5. The continuous polymerization equipment of claim 1, wherein an online infrared detector is disposed on a gas phase outlet pipeline at a top of the reactive distillation column.

6. The continuous polymerization equipment of claim 5, further comprising an online diamine replenishing pipeline for replenishing the diamine in real time, wherein the online diamine replenishing pipeline is connected with and in communication with the prepolymerization heat exchanger.

7. The continuous polymerization equipment of claim 1, wherein the polymerizer comprises a polymerizer body, an exhaust pipe in communication with the polymerizer body, and a multi-stage heat exchanger located in the exhaust pipe.

8. The continuous polymerization equipment of claim 1, wherein the number of the polymerizer is one or more than two.

9. A continuous polymerization process for preparing a polyamide by using a diacid and a diamine, which is carried out by using the continuous polymerization equipment of claim 1, comprising the following steps:
transporting a salt solution to the evaporator for evaporation and concentration; then transporting same to the reactive distillation column; after preheating, reaching the plurality of trays in the tray section and flowing layer by layer to the plurality of trays adj acent to the reboiler; then sequentially transporting same to the preheating heat exchanger, the prepolymerization heat exchanger, and the reboiler, and then to the flash drum and the polymerizer for flash evaporation and polymerization; and obtaining the polyamide after pelletization, wherein a material circulation is carried out between the prepolymerization heat exchanger and the reboiler.

10. The continuous polymerization process of claim 9, wherein a degree of polymerization of a material transporting to the preheating heat exchanger is in a ranger of 2 to 3.

11. The continuous polymerization process of claim 9, wherein the number of tray of the plurality of trays is in a range of 20 to 25; or
the distance between adjacent two of the plurality of trays is in a range of 450 mm to 550 mm; or
the height of the overflow weir of each of the plurality of trays is in a range of 100 mm to 200 mm.

12. The continuous polymerization process of claim 9, wherein an online infrared detector is disposed on a gas phase outlet pipeline at a top of the reactive distillation column.

13. The continuous polymerization process of claim 12, wherein the continuous polymerization equipment further comprises an online diamine replenishing pipeline for replenishing the diamine in real time, wherein the online diamine replenishing pipeline is connected with and in communication with the prepolymerization heat exchanger.

14. The continuous polymerization process of claim 9, wherein the polymerizer comprises a polymerizer body, an exhaust pipe in communication with the polymerizer body, and a multi-stage heat exchanger located in the exhaust pipe.

15. The continuous polymerization process of claim 9, wherein the number of the polymerizer is one or more than two.
